# NEUE EUROPÄISCHE PATENTSCHRIFT

(11) **EP 2 049 362 B2**
(45) Veröffentlichungstag und Bekanntmachung des Hinweises auf die Entscheidung über den Einspruch: **23.03.2016**
(45) Hinweis auf die Patenterteilung: 06.04.2011
(21) Anmeldenummer: 07802026.0
(22) Anmeldetag: 31.08.2007
(51) Int. Cl.: B60N 2/56, B60N 2/58

(54) **KLIMATISIERTER FAHRZEUGSITZ**
AIR-CONDITIONED MOTOR VEHICLE SEAT
SIÈGE DE VÉHICULE CLIMATISÉ

(30) Priorität: 11.10.2006 DE 102006048048
(43) Veröffentlichungstag der Anmeldung: 22.04.2009
(73) Patentinhaber: Bayerische Motoren Werke Aktiengesellschaft, 80809 München (DE)
(72) Erfinder: PUDENZ, Christian, 80809 München (DE)
(86) Internationale Anmeldenummer: PCT/EP2007/007608
(87) Internationale Veröffentlichungsnummer: WO 2008/043413

(56) Entgegenhaltungen:
- EP-A- 1 365 827
- EP-B1- 1 364 827
- EP-B1- 1 519 854
- WO-A1-03/101777
- DE-A1-102006 023 129
- DE-C1- 10 024 879
- DE-C1- 10 156 658

## Beschreibung

Die Erfindung betrifft einen klimatisierten Fahrzeugsitz mit einem unteren, luftundurchlässigen Sitz- oder Rückenlehnen-Polsterteil, einer auf diesem angeordneten, luftdurchfluteten Zwischenschicht und einem durch Abheftungen in voneinander abgegrenzte Polsterzonen unterteilten, seitens der Zwischenschicht luftdurchströmten Polsterbezug, nach dem Oberbegriff des Patentanspruchs 1.

Bei einem klimatisierten Fahrzeugsitz der aus der DE 100 24 879 C1 bekannten Art sind die Abheftungen als Steppnähte in dem luftdurchströmten, aus einer Weichschaumschicht und der Stoffbespannung bestehenden Polsterbezug ausgebildet. Dabei ist die Einzugstiefe der Abheftungen auf die Dicke des Polsterbezugs beschränkt und ferner fehlt eine lastfeste Verankerung der Abheftungen am unteren Polsterteil.

Weiterhin ist aus der EP 1 364 827 B1 ein aktiv belüfteter Kraftfahrzeugsitz bekannt, bei dem der Polsterbezug auf dem Wege über die luftdurchflutete Zwischenschicht in der Weise am unteren Polsterteil befestigt ist, dass in Längsrichtung der Abheftungen verteilt Stehbolzen am unteren Polsterteil verschraubt sind, die die Zwischenschicht durchgreifen und mit in den Polsterbezug eingezogenen Abheftstangen lösbarverhaktsind. Hierdurch werden zwar stärkere Einschnürungen der luftführenden Zwischenschicht im Bereich der Abheftungen vermieden, jedoch wird der Sitzkomfort durch die nach oben über die Zwischenschicht ragenden Stehbolzen erheblich beeinträchtigt.

Schließlich sind bei dem aus der DE 101 56 658 C1 bekannten Fahrzeugsitz der eingangs genannten Art, bei dem die luftdurchflutete Zwischenschicht längs der Abheftungen in einzelne, lüftungsmäßigvoneinandergetrennte Teilstücke aufgeteilt ist, Einlegestreifen in Form von Abstandsgewirken versenkt im unteren Polsterteil angeordnet, die längenkonform zu den Abheftungen unterhalb derabheftseitigen Randabschnitte der Zwischenschicht-Teilstücke verlaufen und als Luftbrücken zwischen diesen wirken. Erzeugt werden die Abheftungen durch Zugdrähte, die sich durch die Einlegestreifen erstrecken und im unteren Polsterteil verankert sind. Die Herstellung und Anordnung der luftbrückenbildenden Einlegestreifen erfordert einen erhöhten Fertigungsaufwand, und da die Einlegestreifen durch die einwirkenden Zugkräfte der Abheftdrähte querschnittsverengend zusammengepresst werden, kann es zu einer Behinderung des Luftaustausches zwischen den einzelnen Teilstükken der Zwischenschicht kommen.

Aufgabe der Erfindung ist es, bei einem Fahrzeugsitz der beanspruchten Art auf fertigungstechnisch einfache Weise und ohne Beeinträchtigung des Sitzkomforts eine unbehinderte Sitzbelüftung und eine dauerhaft sichere Fixierung der Abheftungen zu erzielen.

Diese Aufgabe wird erfindungsgemäß durch einen Fahrzeugsitz mit den Merkmalen des Patentanspruchs 1 gelöst.

In einem Ausführungsbeispiel sind die Luftbrükken in Längsrichtung der Abheftungen beidseitig versenkt im Polsterteil eingefasst, und die Abheftungen an den seitlich unmittelbar an die Luftbrücken anschließenden Wandabschnitten des Polsterteils verankert, so dass die Luftbrücken von den aus der Abheftung resultierenden Spannkräften weitgehend entlastet und eine dauerhaft zug- und rutschfeste Befestigung des Polsterbezugs längs der Abheftungen sichergestellt wird. Dies ergibt eine unbehinderte Luftdurchflutung der Zwischenschicht auf dem Wege über die Luftbrücken bei gleichzeitig hohem Sitzkomfort in Verbindung mit einer herstellungsmäßig einfachen, langzeitstabilen Sitzkonstruktion.

Gemäß der Erfindung sind die Luftbrücken und die Zwischenschicht als einstückiges Einlegeteil vorgefertigt, und zwar insbesondere aus einem Abstandsgewirke.

Die im Vergleich zu der Zwischenschicht geringere Querschnittsbreite der Luftbrücken lässt sich durch eine demgegenüber vergrößerte Querschnittshöhe und/ oder, wie bevorzugt, durch eine gegenüber der Zwischenschicht höhere spezifische Luftdurchlässigkeit der Luftbrücken kompensieren.

Um die Abheftungen über eine möglichst große Länge unmittelbar am Polsterteil verankern zu können, sind die an die Luftbrücken angrenzenden Wandabschnitte des Polsterteils in Längsrichtung der Abheftungen vorzugsweise mindestens ebenso breit wie die Luftbrücken bemessen, und eine besonders große Einzugstiefe des Polsterbezugs lässt sich dadurch erreichen, dass die Abheftungen in einem Einzugskanal des Polsterteils angebracht und die Luftbrücken beidseitig bündig zum Einzugskanal versenkt im Polsterteil angeordnet sind.

Im Hinblick auf eine besonders sichere Befestigung der Abheftungen am Polsterteil empfiehlt es sich, diese an einem sich im Polsterteil durchgehend längs der Abheftungen erstreckenden Abheftelement zu verankern, welches aus Gründen einer gleichmäßig stabilen Einbettung im Polsterteilmaterial vorzugsweise sowohl unterhalb der Luftbrücken als auch in den luftbrückenfreien Wandabschnitten des Polsterteils in gleichmäßiger Tiefe verläuft.

Zur Entlastung der Luftbrücken von den aus der Abheftung resultierenden Spannkräften ist die Verankerung der Abheftungen in besonders bevorzugter Weise auf die luftbrückenfreien Wandabschnitte des Polsterteils beschränkt.

Die Erfindung wird nunmehranhand eines Ausführungsbeispiels in Verbindung mit den Zeichnungen näher erläutert. Es zeigen in stark schematisierter Darstellung:
- **Fig. 1**: eine perspektivische Darstellung eines klimatisierten Fahrzeugsitzes nach der Erfindung mit einem luftdurchflu- teten Abstandsgewirke in den kreuzschraffierten Flächen- bereichen;

- **Fig. 2**: die Aufsicht eines einschließlich der Luftbrükken einstü- ckigen Gewirkezuschnitts;
- **Fig. 3**: einen Schnitt längs einer der Abheftungen des in Fig. 1 gezeigten Fahrzeugsitzes;
- **Fig. 4**: einen Schnitt quer zu einer der Abheftungen des in Fig. 1 gezeigten Fahrzeugsitzes längs der Linie 1 der Fig. 1; und
- **Fig. 5**: einen Schnitt quer zu einer der Abheftungen des in Fig. 1 gezeigten Fahrzeugsitzes längs der Linie II der Fig. 1.

Der in den Fign. gezeigte, aktiv belüftete Fahrzeugsitz besteht aus einem Sitz- und einem Rückenlehnenmodul 1, 2, die jeweils ein luftundurchlässiges Polsterteil 3 aus Schaumstoff, eine dieses in den kreuzschraffierten Flächenbereichen überdeckende, luftdurchflutete Zwischenschicht 4 aus einem grobmaschigen Abstandsgewirke sowie einen seitens der Zwischenschicht 4 luftdurchströmten, insgesamt mit 5 bezeichneten Polsterbezug enthalten, welcher eine von Luftöffnungen 6 durchsetzte Schaumstoffauflage 7 und einen diese überspannenden Bezugsstoff 8 aufweist.

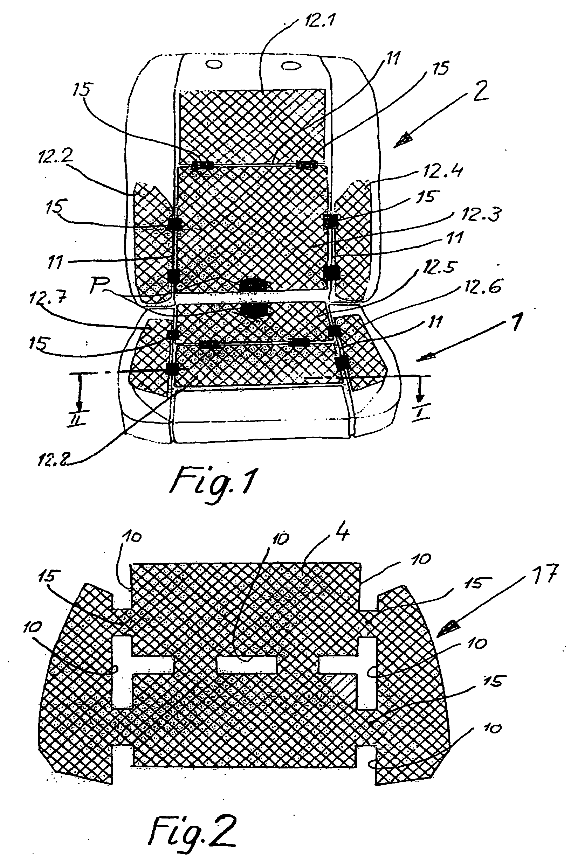

Die Luftzufuhr zum Abstandsgewirke 4 des Sitz- bzw. des Rückenlehnenmoduls 1, 2 erfolgt z. B. an den in Fig. 1 durch Pfeile P angedeuteten Lufteinlassstellen mit Hilfe von - nicht gezeigten - Minilüftern in einem Luftschacht des Polsterteils 3.

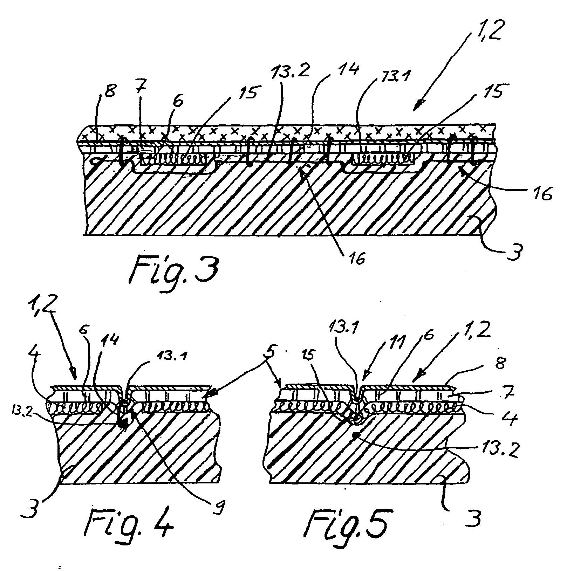

Zum Spannen des Polsterbezugs 5 sind am Sitz- und am Rückenlehnenmodul 1, 2 quer- und längsverlaufende Abheftungen 11 vorgesehen, die den Polsterbezug 5 in einzelne, voneinander abgegrenzte Polsterzonen 12.1....12.8 unterteilen und jeweils auf Seiten des Polsterbezugs 5 einen durchlaufenden Abheftdraht 13.1 aufweisen, der durch zugfeste, aber in Druckrichtung nachgiebige Abheftklammem 14 mit einem weiteren, im Polsterteil 3 durchlaufend eingebetteten Abheftdraht 13.2 zugverspannt ist. Zur Erhöhung der Einzugstiefe sind die Abheftungen 11 in einem Einzugskanal 9 des Polsterteils 3 (Fig. 4) angeordnet.

Die in den einzelnen Polsterzonen 12 liegenden Flächenabschnitte der Zwischenschicht 4 sind durch unterhalb der Abheftungen 11 quer zu diesen verlaufende Luftbrücken 15 (in Fig. 1 geschwärzt dargestellt) luftmäßig miteinander verbunden. Wie die Fign. 2 und 3 zeigen, ist die Breite der Luftbrücken 15 in Längsrichtung der Abheftungen 11 wesentlich geringer als die Länge der abheftseitigen Randzonen 10 der Zwischenschicht 4 (Fig. 2) und der beidseitig angrenzenden, luftbrückenfreien Wandabschnitte 16 des Polsterteils 3 (Fig. 3). Zwischen den Wandabschnitten 16 ist das Polsterteil 3 mit Aussparungen versehen, in denen die Luftbrücken 15 versenkt angeordnet sind, derart, dass sie im Wesentlichen bündig an die angrenzenden Einzugskanäle 9 anschließen.

Wie aus Fig. 3 ersichtlich ist, erstreckt sich der Abheftdraht 13.2 durchgehend in gleichmäßiger Tiefe im Polsterteil 3 sowohl unterhalb der Luftbrücken 15 als auch längs der Wandabschnitte 16, wobei die Verankerung der Abheftungen 11 mittels der Abheftklammem 14 auf die Wandabschnitte 16 des Polsterteils 3 begrenzt ist, so dass die Abheftkräfte im Wesentlichen von den luftbrückenfreien Wandabschnitten 16 aufgenommen und von den Luftbrücken 15 weitgehend ferngehalten werden. Hierdurch wird eine hochstabile Verankerung der Abheftungen 11 unmittelbar am Polsterteil 3 erreicht, ohne dass die Luftbrücken 15 durch die Abheftkräfte querschnittsverengend belastet werden.

Zur Herstellung eines Sitz- oder Rückenlehnenmoduls 1 bzw. 2 wird zunächst ein einstückiger Gewirkezuschnitt aus einem Abstandsgewirke angefertigt, z. B. der Gewirkezuschnitt 17 gemäß Fig. 2 für den Sitzmodul 1, welcher einschließlich der Luftbrücken 15 die den einzelnen Polsterzonen 12.5....12.8 des Sitzmoduls 1 entsprechenden Abschnitte der Zwischenschicht 4 umfasst. Anschließend wird der Zuschnitt 17 auf dem unter Einbettung des Abheftdrahtes 13.2 vorgefertigten Polsterteil 3 abgelegt, so dass die Luftbrücken 15 zwischen den hochstehenden Wandabschnitten 16 des Polsterteils 3 bündig zu den Einzugskanälen 9 aufgenommen werden, woraufhin derSitz-oder Rückenlehnenmodul 1, 2 durch Anbringen des Polsterbezugs 5 und Verspannen der Abheftungen 11 komplettiert wird.

Zum Ausgleich der im Vergleich zur Zwischenschicht 4 geringeren Querschnittsbreite der Luftbrücken 15 können diese auch getrennt von der Zwischenschicht 4 aus einem anderen Abstandsgewirke größerer Querschnittshöhe oder geringeren spezifischen Durchflusswiderstands als die Zwischenschicht 4 angefertigt werden.

## Patentansprüche

1. Klimatisierter Fahrzeugsitz, mit einem luftundurchlässigen, unteren Sitz- oder Rückenlehnen-Polsterteil, einer luftdurchfluteten Zwischenschicht und einem seitens der Zwischenschicht luftdurchströmten Polsterbezug, welcher durch am luftundurchlässigen Polsterteil verankerte Abheftungen in voneinander abgegrenzte Polsterzonen unterteilt ist, wobei zur Verbindung der Zwischenschicht zwischen den einzelnen Polsterzonen quer zu den Abheftungen verlaufende Luftbrücken vorgesehen sind, und die Luftbrücken (15) in Längsrichtung der Abheftungen (11) schmäler als die abheftseitigen Randzonen (10) der Zwischenschicht (4) ausgebildet sind
**dadurch gekennzeichnet, dass** die Abheftungen ohne Zwischenlage der Luftbrücken an den beidseitig an diesen angrenzenden Wandabschnitten (16) des Polsterteils (3) verankert sind und die Luftbrücken (15) und die Zwischenschicht (4) als einstückiges Einlegeteil (17) vorgefertigt sind.

2. Fahrzeugsitz nach Anspruch 1, **dadurch gekennzeichnet, dass** die Luftbrücken (15) eine höhere spezifische Luftdurchlässigkeit als die Zwischenschicht (4) aufweisen.

3. Fahrzeugsitz nach einem der vorhergehenden Ansprüche, **dadurch gekennzeichnet, dass** die an die Luftbrücken (15) angrenzenden Wandabschnitte (16) des Polsterteils (3) in Längsrichtung der Abheftungen (11) mindestens ebenso breit wie die Luftbrücken (15) bemessen sind.

4. Fahrzeugsitz nach einem der vorhergehenden Ansprüche, bei dem der Polsterbezug in einem Einzugskanal des Polsterteils abgeheftet ist, **dadurch gekennzeichnet, dass** die Luftbrücken (15) beidseitig bündig zum Einzugskanal (9) im Polsterteil (3) versenkt angeordnet sind.

5. Fahrzeugsitz nach einem der vorhergehenden Ansprüche, **dadurch gekennzeichnet, dass** die Abheftungen (11) an im luftundurchlässigen Material des Polsterteils (3) eingeschlossenen, sich im Polsterteil durchgehend längs der Abheftungen (11) erstreckenden Abheftelementen (13) verankert sind.

6. Fahrzeugsitz nach Anspruch 5, **dadurch gekennzeichnet, dass** die Abheftelemente (13.2) derart profiliert sind, dass sie im Polsterteilmaterial sowohl unterhalb der Luftbrücken (15) als auch in den luftbrückenfreien Wandabschnitten des Polsterteils (3) in gleichmässiger Tiefe verlaufen.

7. Fahrzeugsitz nach einem der vorhergehenden Ansprüche, **dadurch gekennzeichnet, dass** die Verankerung der Abheftungen (11) auf die luftbrückenfreien Wandabschnitte (16) des Polsterteils (3) beschränkt ist.

8. Fahrzeugsitz nach einem der vorhergehenden Ansprüche, **dadurch gekennzeichnet, dass** die Zwischenschicht (4) und die Luftbrücken (15) aus einem Abstandsgewirke bestehen.

## Claims

1. An air-conditioned vehicle seat comprising an air-impermeable bottom seat or back-rest upholstery part, an air-permeable intermediate layer and an upholstery cover through which air flows on the intermediate-layer side, the upholstery being divided into zones demarcated from one another by stitching anchored to the impermeable upholstery part, wherein air bridges are provided transversely of the stitching in order to connect the intermediate layer between the individual upholstery zones and the air bridges (15), in the longitudinal direction of the stitching (11), are made narrower than the edge zones (10) of the intermediate layer (4) on the stitching side, **characterised in that**
the stitching, without interposition of the air bridges, is anchored to the wall portions (16) of the upholstery part (3) adjoining the air bridges on each side and the air bridges (15) and the intermediate layer (4) are prefabricated in the form of a one-piece insert (17).

2. A seat according to claim 1, **characterised in that** the air bridges (15) have a higher specific permeability to air than the intermediate layer (4).

3. A seat according to any of the preceding claims, **characterised in that** the wall portions (16) of the upholstery part (3) adjoining the air bridges (15) are made at least as wide as the air bridges (15) in the longitudinal direction of the stitching (11).

4. A seat according to any of the preceding claims, wherein the upholstery covering is stitched in a feed duct of the upholstery part, **characterised in that** the air bridges (15) are flush with the feed duct (9) on both sides and embedded in the upholstery part (3).

5. A seat according to any of the preceding claims, **characterised in that** the stitching (11) is anchored to stitching elements (13) enclosed in the impermeable material of the upholstery part (3) and extending in the upholstery part along the stitching (11).

6. A seat according to claim 5, **characterised in that** the stitching elements (13.2) are so profiled that they extend to a uniform depth in the upholstery-part material, both below the air bridges (15) and in the wall portions of the upholstery part (3) free from air bridges.

7. A seat according to any of the preceding claims, **characterised in that** the anchoring of the stitching (11) is restricted to the wall portions (16) of the upholstery part (3) free from air bridges.

8. A seat according to any of the preceding claims, **characterised in that** the intermediate layer (4) and the air bridges (15) are made from a knitted spacer fabric.

## Revendications

1. Siège climatisé de véhicule comportant une partie rembourrée d'assise ou de dossier, imperméable à l'air, une couche intermédiaire ventilée et un revêtement de rembourrage traversé par de l'air du côté de la couche intermédiaire, et qui est subdivisé en des zones de rembourrage délimitées l'une par rapport à l'autre par des accrochages dans la partie rembourrée imperméable à l'air,
des passages d'air étant prévus entre les différentes zones de rembourrage, transversalement aux accrochages, pour relier la couche intermédiaire, et
les passages d'air (15) sont plus étroits dans la direction longitudinale des accrochages (11), que les zones marginales (10), côté accrochage, de la couche intermédiaire (4),
siège **caractérisé en ce que**
les accrochages sont fixés sans couche intermédiaire des passages d'air sur les segments de paroi (16) de la partie rembourrée (3), adjacents des deux côtés aux accrochages, et les passages d'air (15) et la couche intermédiaire (4), sont préfabriqués sous la forme d'un insert (17) en une seule pièce.

2. Siège de véhicule selon la revendication 1,
**caractérisé en ce que**
les passages d'air (15) ont une perméabilité spécifique de l'air plus élevée que la couche intermédiaire (4).

3. Siège de véhicule selon l'une des revendications précédentes,
**caractérisé en ce que**
les segments de paroi (16) de la partie rembourrée (3) adjacents aux passages d'air (15), sont dimensionnés dans la direction longitudinale des accrochages (11) avec une largeur au moins aussi grande que celle des passages d'air (15).

4. Siège de véhicule selon l'une des revendications précédentes, selon lequel le revêtement de rembourrage est accroché dans un canal de retrait de la partie rembourrée,
siège **caractérisé en ce que**
les passages d'air (15) sont enfoncés des deux côtés au niveau du canal de retrait (9) dans la partie rembourrée (3).

5. Siège de véhicule selon l'une des revendications précédentes,
**caractérisé en ce que**
les accrochages (11) sont enfermés dans la matière imperméable à l'air de la partie rembourrée (3), en étant accrochés dans la partie rembourrée, par des éléments d'accrochages (13) s'étendant le long des accrochages (11).

6. Siège de véhicule selon la revendication 5,
**caractérisé en ce que**
les éléments d'accrochage (13.2) sont profilés pour passer à une profondeur régulière dans la matière de la partie rembourrée à la fois sous les passages d'air (15) et aussi dans les segments de paroi sans passages d'air de la partie rembourrée (3).

7. Siège de véhicule selon l'une des revendications précédentes,
**caractérisé en ce que**
la fixation des accrochages (11) est limitée aux segments de paroi sans ponts d'air (16) de la partie rembourrée (3).

8. Siège de véhicule selon l'une des revendications précédentes,
**caractérisé en ce que**
la couche intermédiaire (4) et les passages d'air (15) sont réalisés par des tricots d'écartement.
